# FASCICULE DE BREVET EUROPEEN

(11) **EP 0 359 655 B1**
(45) Date de publication et mention de la délivrance du brevet: **17.03.1993**
(21) Numéro de dépôt: 89402488.4
(22) Date de dépôt: 12.09.1989
(51) Int. Cl.: F16F 13/00

(54) **Perfectionnements apportés aux manchons antivibratoires hydrauliques**
Hydraulisch gedämpfte Lagerbuchsen
Hydraulically damped bushings

(30) Priorité: 13.09.1988 FR 8811919
(43) Date de publication de la demande: 21.03.1990
(73) Titulaire: HUTCHINSON, F-75008 Paris (FR)
(72) Inventeur: Butow, Bernd-Siegfried, D-7000 Stuttgart-50 (DE); Bouhier, Bernard, F-18100 Vierzon (FR)
(74) Mandataire: Behaghel, Pierre

(56) Documents cités:
- EP-A- 0 199 240
- EP-A- 0 284 049
- DE-U- 8 714 241

## Description

L'invention est relative aux manchons antivibra- toires hydrauliques comprenant deux armatures rigides tubulaires s'entourant l'une l'autre et de préférence de révolution au moins en partie, coaxiales et concentriques au moins sous charge, armatures réunies entre elles par un corps en élastomère conformé de façon à former avec celles-ci au moins deux poches étanches opposées diamétralement selon une direction Y et communiquant entre elles par un canal étroit, l'ensemble desdites poches et dudit canal étant rempli d'un liquide amortisseur.

De tels manchons sont destinés a être montés entre deux pièces rigides solidarisables respectivement avec les deux armatures et susceptibles de subir l'une par rapport à l'autre des oscillations orientées selon la direction diamétrale Y, l'ensemble étant agencé de façon telle que, pour certaines au moins de ces oscillations, le liquide soit refoulé alternativement de l'une des poches vers l'autre et inversement à travers le canal étroit, ce qui crée dans ce liquide, pour certaines fréquences des oscillations, un phénomène de résonance propre à amortir la transmission de ces oscillations de l'une des armatures à l'autre.

Les manchons du genre en question sont par exemple destinés à être interposés entre, d'une part, un châssis de véhicule et, d'autre part, le moteur à combustion interne ou le train avant ou arrière de ce véhicule.

L'invention concerne plus particulièrement, parmi les manchons ci-dessus, ceux dans lesquels l'orifice, du canal étroit, qui débouche dans l'une des deux poches est situé en dehors des plages centrales des portions, des deux armatures rigides tubulaires qui délimitent choisies de façon telle que la plaquette s'applique jointivement en permanence contre la face interne de l'armature tubulaire externe et que, pour la position de repos du manchon, le plot vienne en contact avec la face externe de l'armature tubulaire interne.

Dans les modes de réalisation connus des manchons du genre ci-dessus (voir le document DE-U-87 14241), la plaquette recourbée s'étend dans les deux poches, sur environ 270 degrés, et le canal étroit s'étend, avec ses orifices, au voisinage du plan transversal médian du manchon, ce qui pose certains problèmes de construction.

L'invention propose une réalisation à la fois plus simple et plus efficace.

A cet effet, les manchons du genre en question selon l'invention sont essentiellement caractérisés en ce que l'étendue angulaire de la plaquette recourbée est au plus égale à 180 degrés, cette plaquette s'étendant uniquement dans la poche qui contient le plot, en ce que l'orifice, du canal étroit, qui débouche dans cette poche, est décalé axialement par rapport aux plages centrales des portions, des deux armatures, qui délimitent ladite poche et par rapport à la plaquette et en ce que, pour la position de repos du manchon, le plot est précomprimé diamétralement entre les deux armatures.

Dans un mode de réalisation préféré, en outre, la surface latérale extérieure du corps en élastomère est adhérée sur une cage cylindrique évidée par des ouvertures et la plaquette est dimensionnée de façon à combler l'une des ouvertures de cette cage.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

Les figures 1, 2 et 3 de ce dessin, montrent un manchon antivibratoire hydraulique de support ou d'articulation établi selon l'invention, respectivement en coupe axiale selon 1-1, figure 2, en coupe transversale selon II-II, figure 1 et en vue en bout selon la flèche III de la figure 1.

La figure 4 montre en vue perspective un composant de ce manchon.

D'une façon connue en soi, le manchon illustré comprend :
- une armature métallique interne tubulaire de révolution 1,
- une armature métallique externe tubulaire de révolution 2 coaxiale à l'armature 1 au moins pour l'état monté et chargé du manchon et entourant cette armature 1,
- et un corps en élastomère 3 reliant l'une à l'autre les deux armatures 1 et 2 en ménageant entre celles-ci deux poches étanches 4, 4' diamétralement opposées selon une direction Y.

Plus exactement le corps 3, qui présente la forme générale de deux disques parallèles 3₁, 3₂ réunis entre eux par une entretoise épaisse et plate 3₃ formant un V largement ouvert (voirfig. 2), relie l'armature interne 1 à une cage rigide intermédiaire 5 qui est elle-même emmanchée dans l'armature 2 avec interposition d'une fourrure 6 en matériau élastique.

La cage intermédiaire 5 est elle-même composée de deux bagues cylindriques 5₁, 5₂ contre lesquelles sont adhérées respectivement les périphéries des deux disques 3₁, 3₂.

Ces bagues sont entretoisées axialement par deux pontets 5₃ diamétralement opposés qui définissent avec ladite bague deux ouvertures disposées radialement en regard des deux poches 4 et 4' : les bords de l'entretoise épaisse 3₃ sont adhérés sur lesdits pontets 5₃.

Les deux poches 4, 4' communiquent entre elles par deux canaux étroits 7 et sont remplies ainsi que ces canaux d'un liquide amortisseur.

Les canaux 7 sont délimités, d'une part, par deux gorges semi-circulaires 5₄ à profil en L évidées dans une arête circulaire de l'une des bagues (5₂) et, d'autre part, par un anneau métallique 8 à profil en L coiffant les gorges 5₄, les embouchures 9 des deux canaux dans les deux poches 4 et 4' étant formées en prévoyant deux méplats ou renfoncements radiaux 5₅ dans la bague 5₂.

Selon la présente invention, la poche 4 du manchon ainsi décrit est garnie d'une butée permettant d'amortir avec progressivité les fortes sollicitations exercées sur ce manchon selon la direction Y, notamment dans le sens tendant à écraser ladite poche 4.

Cette butée est constituée par un plot 10 en élastomère rapporté au milieu de la face concave d'une plaquette 11 incurvée selon une tuile ou portion de cylindre de révolution.

Le sommet du plot 10 est lui-même délimité par une face concave propre a s'adapter jointivement contre l'armature tubulaire interne 1 ou plus précisément contre une douille cylindrique 12 entourantjoin- tivement la portion médiane de cette armature.

D'une façon plus générale, les formes et dimensions du plot et de la plaquette sont choisies de façon telle :
- que toute l'étendue de la face externe de la plaquette prenne appui jointivement contre la fourrure 6,
- et que, pour la position de repos normale du manchon, le plot 10 soit précomprimé avec application jointive de son sommet contre la douille 12.

Une armature rigide de renfort 13, présentant notamment elle-même la forme d'un plot massif, est avantageusement noyée à l'intérieur du plot en élastomère 10 de façon à le renforcer. Cette armature 13 est solidarisée avec la plaquette, notamment par soudure.

Les tranches qui délimitent les deux extrémités circonférentielles de la plaquette reposent contre des tranches en regard des pontets 5₃ et ladite plaquette est logée axialement pratiquement sans jeu entre les deux bagues 5₁, 5₂.

En d'autres termes la "tuile" ou plaquette 11 ferme extérieurement la poche 4 d'une façon quasi- complète mais, bien entendu, le plot 10 est plus étroit que cette plaquette de façon que puisse être réservé autour de lui un volume continu pour le liquide amortisseur, volume communiquant sans encombre avec l'embouchure 9 correspondante.

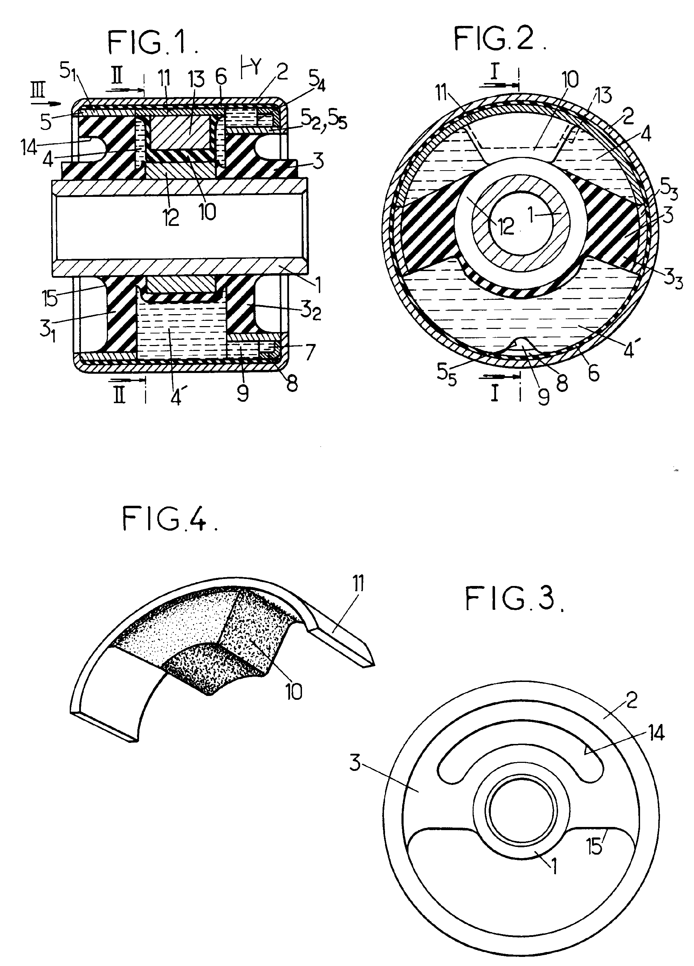

La forme générale dudit plot 10 est avantageusement celle d'un tronc de pyramide, comme bien visible sur la figure 4.

L'étendue angulaire de la "tuile" ou plaquette 11 est au plus égale a 180 degrés et de préférence relativement grande, savoir au moins égale à 90 degrés, de façon que la pression de précontrainte appliquée sur l'armature externe soit répartie sur une grande surface.

Le montage de la butée ci-dessus décrite est très simple.

Il suffit de placer dans la poche 4 la plaquette 11 avec son plot 10 tourné vers l'axe du manchon, puis d'enfoncer élastiquement cette pièce à l'intérieur de ladite poche, de façon à appliquer le plot contre la douille 12 et la plaquette 11 contre les pontets 5₃, lors de la mise en place axiale de l'armature tubulaire externe 2 sur l'ensemble.

Il est donc inutile de recourir à des moyens de fixation particuliers tels qu'un sertissage ou une soudure.

Des alvéoles 14, 15 (fig. 1 et 3), notamment en forme de haricots, sont évidés dans les faces transversales qui délimitent le manchon à ses deux extrémités axiales, ce qui permet à la fois d'améliorer la souplesse de ce manchon et de l'alléger sans pour autant réduire sa résistance mécanique.

L'armature interne 1 est destinée à être solidarisée avec une broche (non représentée) qui la traverse jointivement alors que l'armature externe 2 est destinée à être solidarisée avec un palier (non représenté), cette broche et ce palier étant solidaires respectivement de deux éléments rigides entre lesquels on désire monter un support antivibratoire, éléments tels qu'un moteur de véhicule et que le châssis de ce véhicule.

Le fonctionnement du manchon ci-dessus décrit est le suivant.

Lorsqu'une oscillation de fréquence relativement basse (par exemple de l'ordre de 10 à 50 Hz) et d'amplitude relativement grande (supérieure à 1 mm) est imposée selon la direction diamétrale Y à l'une des deux armatures 1, par rapport à l'autre, le liquide intérieur est refoulé alternativement à ladite fréquence dans les canaux 7 depuis l'une des poches 4, 4' dans l'autre et inversement et les dimensions dudit canal, en particulier sa longueur et sa section, sont déterminées de façon telle que l'on observe un excellent amortissement de ladite oscillation pour une valeur donnée de ladite fréquence par création d'un effet de résonance dans la colonne de liquide alors présente dans le canal.

Lorsqu'une forte sollicitation est exercée sur le manchon selon une direction Y dans le sens tendant à écraser la poche 4, la compression du plot 10 est accrue a partir d'une valeur non nulle, vu la précontrainte de ce plot, ce qui permet de conférer à ce dernier une loi de déformation plus favorable que s'il n'avait été soumis à l'origine à aucune compression.

Inversement, l'exercice d'une forte sollicitation dans le sens inverse du précédent se traduit par une réduction de la précontrainte du plot pouvant allerjus- qu'à annuler sa compression et à décoller ledit plot de la douille 12 : ici encore, la loi de la déformation du plot initialement précontraint en fonction des efforts appliqués sur lui se révèle plus favorable, au niveau de l'amortissement global observé, que pour un plot décollé dès l'origine de l'armature interne en regard.

En suite de quoi, et quel que soit le mode de réalisation adopté, on dispose finalement d'un manchon antivibratoire hydraulique dont la constitution, le fonctionnement et les avantages résultent suffisamment de ce qui précède.

Comme il va de soi et comme il résulte d'ailleurs déjà de ce qui précède, l'invention ne se limite nullement à ceux de ses modes d'application qui ont été plus particulièrement envisagés ; elle en embrasse, au contraire, toutes les variantes.

## Revendications

1. Manchon antivibratoire hydraulique comprenant deux armatures rigides tubulaires (1,2) s'entourant l'une l'autre et réunies entre elles par un corps en élastomère (3) conformé de façon à former avec celles-ci au moins deux poches étanches (4,4') opposées diamétralement et communiquant entre elles par un canal étroit (7), l'ensemble desdites poches et dudit canal étant rempli d'un liquide amortisseur, ainsi qu'un plot en élastomère (10) logé dans l'une des deux poches (4) et rapporté sur la face concave d'une plaquette rigide (11) recourbée selon un tronçon de cylindre de révolution, les formes et dimensions du plot et de la plaquette étant choisies de façon telle que la plaquette s'applique jointivement en permanence contre la face interne de l'armature tubulaire externe (2) et que, pour la position de repos du manchon, le plot (10) vienne en contact avec la face externe de l'armature tubulaire interne (1), caractérisé en ce que l'étendue angulaire de la plaquette recourbée (11) est au plus égale à 180 degrés, cette plaquette s'étendant uniquement dans la poche (4) qui contient le plot (10), en ce que l'orifice (9), du canal étroit (7), qui débouche dans cette poche (4), est décalé axialement par rapport aux plages centrales des portions, des deux armatures, qui délimitent ladite poche et par rapport à la plaquette et en ce que, pour la position de repos du manchon, le plot (10) est précomprimé diamétralement entre les deux armatures.

2. Manchon selon la revendication 1, caractérisé en ce que la surface latérale extérieure du corps en élastomère (3) est adhérée sur une cage cylindrique (5) évidée par des ouvertures et en ce que la plaquette (11) est dimensionnée de façon à combler l'une des ouvertures de cette cage.

3. Manchon selon l'une quelconque des revendications 1 et 2, caractérisé en ce que l'étendue angulaire de la plaquette recourbée (11) est au moins égale à 90 degrés.

4. Manchon selon l'une quelconque des revendications précédentes, caractérisé en ce que le plot (10) présente à son sommet une surface concave de forme sensiblement complémentaire de la surface en regard de l'armature tubulaire interne (1).

5. Manchon selon l'une quelconque des revendications précédentes, caractérisé en ce que le plot (10) est renforcé par une armature rigide interne (13) elle-même solidaire de la plaquette (11).

## Patentansprüche

1. Hydraulisch gedämpfte Lagerbuchse, bestehend aus zwei starren rohrförmigen Armaturen (1, 2), von denen die eine die andere umgibt und die miteinander durch einen Körper (3) aus elastomeren Material verbunden sind, der so ausgebildet ist, daß er mit diesen wenigstens zwei dichte Kammern (4,4') bildet, die sich diametral gegenüberliegen und die untereinander über einen engen Durchlaß (7) verbunden sind, wobei die Kammern und der Durchlaß mit einer Dämpfungsflüssigkeit gefüllt sind, sowie einem Block (10) aus elastomeren Material, der in einer der beiden Kammern (4) angeordnet und an die konkave Oberfläche einer starren gebogenen Platte (11) in Form eines Kreiszylinderabschnittes angesetzt ist, wobei die Form und die Abmessungen des Blockes und der Platte so gewählt sind, daß die Platte sich dauernd dicht an die Innenfläche der äußeren rohrförmigen Armatur (2) anlegt und daß der Block (10) im Ruhezustand der Lagerbuchse mit der äußeren Fläche der inneren rohrförmigen Armatur (1) in Berührung kommt, dadurch gekennzeichnet, daß die Winkelerstreckung der kurvenförmig verlaufenden Platte (11) höchstens 180° beträgt, wobei sich die Platte nur in der Kammer (4) erstreckt, die den Block (10) enthält, daß die Öffnung (9) des engen Durchlasses, der in die Kammer (4) mündet, in bezug auf mittlere Bereiche der Abschnitte der beiden Armaturen, die die Kammer begrenzen und in bezug auf die Platte in axialer Richtung versetzt ist und daß der Block (10) im Ruhezustand der Lagerbuchse diamentral zwischen den beiden Armaturen vorkomprimiert ist.

2. Lagerbuchse nach Anspruch 1, dadurch gekennzeichnet, daß die äußere seitliche Fläche des Körpers (3) aus elastomeren Material an einem zylindrischen Gehäuse (5) angebracht ist, in dem Öffnungen ausgenommen sind und daß die Platte (11) so dimensioniert ist, daß sie eine der Öffnungen des Gehäuses ausfüllt

3. Lagerbuchse nach einem der Ansprüche 1 und 2, dadurch gekennzeichnet, daß die Winkelerstreckung der gebogenen Platte (11) wenigstens 90° beträgt.

4. Lagerbuchse nach einem der vorhergehenden Ansprüche, dadurch gekennzeichnet, daß der Block (10) an seiner Spitze eine konkave Oberfläche aufweist, deren Form etwa der der gegenüberliegenden Oberfläche der rohrförmigen inneren Armatur (1) entspricht.

5. Lagerbuchse nach einem der vorhergehenden Ansprüche, dadurch gekennzeichnet, daß der Block (10) durch eine starre innere Armatur (13) verstärkt ist, die ihrerseits mit der Platte (11) verbunden ist.

## Claims

1. A hydraulic vibration damping bushing comprising two tubular rigid armatures (1, 2) surrounding each other and jointly united by an elastomeric body (3) configured in such a way to form with said armatures at least two tight pockets (4,4') diametrically opposed and communicating with each other by a narrow channel (7), said pockets and said channel being filled with a damping liquid, as also an elastomeric pad (10) housed inside one (4) of the pockets and added on the concave face of a rigid plate (11), curved in the manner of a portion of cylinder of revolution, the shapes and sizes of the pad and of the plate being selected in such a way that the plate permanently abuts on the internal face of the external tubular armature (2) and that, in the resting position of the bushing, the pad (10) comes into contact with the external face of the internal tubular armature (1), characterized in that the angular extent of the curved plate (11) is at most equal to 180 degrees, said plate extending only in the pocket (4) which contains the pad (10), in that the orifice (9), of the narrow channel (7), which opens into said pocket (4), is axially offset in relation to the central areas of the portions, of the two armatures, which define this pocket and in relation to the plate and in that, in the resting position of the bushing, the pad (10) is diametrically precompressed between the two armatures.

2. A bushing according to claim 1, characterized in that the external lateral face of the elastomeric body (3) is bonded to a cylindrical cage (5) hollowed out by apertures and in that the plate (11) is sized in such a way to fill up one of the apertures of this cage.

3. A bushing according to claim 1, characterized in that the angular extent of the curved plate (11) is at least equal to 90 degrees.

4. A bushing according to claim 1, characterized in that at its top the pad (10) comprises a concave surface having a shape substantially complementary with the facing surface of the internal tubular armature (1).

5. A bushing according to claim 1, characterized in that the pad (10) is reinforced by an internal rigid armature (13) itself integral with the plate (11).
